(19) Europäisches Patentamt / European Patent Office / Office européen des brevets

(11) **EP 4 106 094 B1**

(12) **EUROPEAN PATENT SPECIFICATION**

(45) Date of publication and mention
of the grant of the patent:
**22.07.2026 Bulletin 2026/30**

(21) Application number: **21757951.5**

(22) Date of filing: **19.02.2021**

(51) International Patent Classification (IPC):
*H01M 50/446* (2021.01)    *H01M 50/449* (2021.01)
*H01M 50/403* (2021.01)    *H01G 11/52* (2013.01)
*H01M 50/42* (2021.01)

(52) Cooperative Patent Classification (CPC):
**H01G 11/52; H01G 9/02; H01M 50/403;
H01M 50/411; H01M 50/42; H01M 50/446;
H01M 50/449;** H01M 50/431; Y02E 60/10

(86) International application number:
**PCT/KR2021/002146**

(87) International publication number:
**WO 2021/167411 (26.08.2021 Gazette 2021/34)**

(54) **SEPARATOR FOR ELECTROCHEMICAL DEVICE AND PRODUCTION METHOD THEREFOR**

SEPARATOR FÜR ELEKTROCHEMISCHE VORRICHTUNG UND HERSTELLUNGSVERFAHREN DAFÜR

SÉPARATEUR POUR DISPOSITIF ÉLECTROCHIMIQUE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2020 KR 20200021861**

(43) Date of publication of application:
**21.12.2022 Bulletin 2022/51**

(73) Proprietor: **LG Energy Solution, Ltd.
Seoul 07335 (KR)**

(72) Inventors:
• **SHIN, Jin-Young
Daejeon 34122 (KR)**
• **KA, Kyung-Ryun
Daejeon 34122 (KR)**
• **LEE, Sang-Joon
Daejeon 34122 (KR)**

(74) Representative: **Hoffmann Eitle
Patent- und Rechtsanwälte PartmbB
Arabellastraße 30
81925 München (DE)**

(56) References cited:
CN-A- 104 521 031      CN-A- 106 549 128
KR-A- 20190 044 529    KR-B1- 101 705 306
KR-B1- 102 005 868     US-A1- 2014 045 033
US-A1- 2017 149 039    US-A1- 2018 069 220
US-A1- 2018 083 259

**Description**

<u>TECHNICAL FIELD</u>

The present application claims priority to Korean Patent Application No. 10-2020-0021861 filed on February 21, 2020 in the Republic of Korea. The present disclosure relates to a separator used for an electrochemical device, such as a secondary battery, an electrochemical device including the same, and a method for manufacturing the separator.

<u>BACKGROUND ART</u>

As technological development and needs for mobile instruments have been increased, secondary batteries as energy sources have been in rapidly increasingly in demand. Recently, use of secondary batteries as power sources for electric vehicles (EV), hybrid electric vehicles (HEV), or the like, have been realized. Accordingly, active studies have been conducted about secondary batteries capable of meeting various needs. Particularly, there is a high need for lithium secondary batteries having high energy density, high discharge voltage and output stability. More particularly, it is required for lithium secondary batteries used as power sources for electric vehicles and hybrid electric vehicles to have high output characteristics so that they may realize a high output in a short time. A polyolefin-based microporous film used conventionally as a separator for an electrochemical device shows a severe heat shrinking behavior at a temperature of 100°C or higher due to its material property and a characteristic during its manufacturing process, including orientation, thereby causing a short-circuit between a positive electrode and a negative electrode. Therefore, in order to improve the heat resistance of a separator, there has been suggested and used a separator having a porous coating layer including a mixture of inorganic particles with a binder polymer and formed on at least one surface of a separator substrate having a plurality of pores. However, it is required that the inorganic particles are incorporated in an excessive amount of 50 wt% or more based on the weight of the binder resin in the porous coating layer with a view to improvement of heat resistance. In this case, since the binder resin is present in a small amount in the porous coating layer, there are problems in that the separator may not be in close contact with electrodes, and in combination with this or independently from this, the porous coating layer may be detached from the separator substrate, resulting in an increase in the resistance of a battery. In addition, the inorganic particles cannot be fixed stably in the porous coating layer but are detached therefrom, and thus the separator may be damaged. KR 102 005 868 discloses a separator comprising a porous substrate and a porous heat-resistant layer formed on the substrate, the porous heat-resistant layer comprises a Si-based organic-inorganic composite binder, an acrylic binder, an optional additional resin and a filler which can be an organic filler, an inorganic filler or an organic/inorganic composite filler.

<u>DISCLOSURE</u>

<u>Technical Problem</u>

The present disclosure is designed to solve the problems of the related art, and therefore the present disclosure is directed to providing a separator for an electrochemical device which has improved adhesion to an electrode, provides improved adhesion between a separator substrate and a porous coating layer and shows low shrinkage and high heat resistance, and a method for manufacturing the same. The present disclosure is also directed to providing a method for manufacturing a separator which uses an aqueous solvent as a solvent for a slurry composition for forming a porous coating layer during the preparation of the slurry composition. It will be easily understood that the objects and advantages of the present disclosure may be realized by the means shown in the appended claims and combinations thereof.

<u>Technical Solution</u>

According to the first embodiment of the present disclosure, there is provided a separator for an electrochemical device which includes a porous separator substrate including a polymer material and a porous coating layer coated on at least one surface of the substrate, wherein the porous coating layer includes inorganic particles and a binder resin, the binder resin includes a mixture of polyvinyl acetate (PVAc) with an acrylic binder resin, the mixture includes the polyvinyl acetate (PVAc) and the acrylic binder resin at a weight ratio of 2:8-9:1, and the acrylic binder resin has a Tg of 0°C or less.

According to the second embodiment of the present disclosure, there is provided the separator for an electrochemical device as defined in the first embodiment, wherein the polyvinyl acetate (PVAc) has a molecular weight (Mw) of 150,000-850,000.

According to the third embodiment of the present disclosure, there is provided the separator for an electrochemical device as defined in the first or the second embodiment, wherein the mixture includes the polyvinyl acetate (PVAc) and the acrylic binder resin at a weight ratio of 3:7-7:3.

According to the fourth embodiment of the present disclosure, there is provided the separator for an electrochemical device as defined in any one of the first to the third embodiments, wherein the inorganic particles include at least one of $Al_2O_3$, boehmite, ATH $(Al(OH)_3)$, MgO, $Mg(OH)_2$ and $BaTiO_3$, and have a particle diameter of 0.1 nm to 2.0 $\mu$m.

According to the fifth embodiment of the present disclosure, there is provided the separator for an electrochemical device as defined in any one of the first to the fourth embodiments, wherein the porous coating layer includes the binder resin and the inorganic particles at a weight ratio of 50:50-1:99.

According to the sixth embodiment of the present disclosure, there is provided the separator for an electrochemical device as defined in any one of the first to the fifth embodiments, wherein the porous coating layer further includes a dispersing agent.

According to the seventh embodiment of the present disclosure, there is provided a method for manufacturing the separator for an electrochemical device as defined in any one of the first to the sixth embodiments, which includes forming a porous coating layer by coating slurry for forming a porous coating layer containing an aqueous solvent, including water, a binder resin and inorganic particles onto the surface of a porous substrate.

According to the eighth embodiment of the present disclosure, there is provided the method for manufacturing the separator for an electrochemical device as defined in the seventh embodiment, wherein the content of the ingredients (solid content), except the solvent, in the slurry for forming a porous coating layer is 1-40 wt%.

According to the ninth embodiment of the present disclosure, there is provided an electrode assembly for an electrochemical device which includes a negative electrode, a positive electrode and a separator interposed between the negative electrode and the positive electrode, wherein the separator is the same as defined in any one of the first to the eighth embodiments.

Advantageous Effects

The separator according to an embodiment of the present disclosure shows improved wettability with an electrolyte by virtue of relatively high polarity of PVAc. In addition, it is possible to improve the peel force between the separator substrate and the porous coating layer by introducing PVAc and to reduce the thickness of the porous coating layer. Therefore, when introducing the separator to a battery, it is possible to improve the resistance characteristics, and to inhibit the porous coating layer from being spaced apart from the separator substrate or to inhibit the inorganic particles from being detached from the porous coating layer. As a result, the separator has high heat resistance and shows a low shrinkage even under a high temperature condition. Further, it is possible to prevent contamination of a production line caused by the inorganic particles detached during the manufacture of the separator, since detachment of the inorganic particles is prevented.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

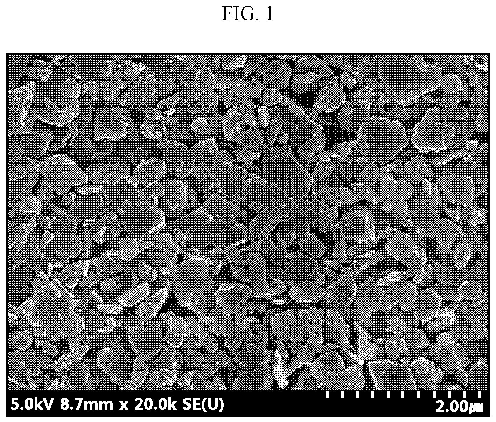

FIG. 1 is a scanning electron microscopic (SEM) image of the surface of the separator according to Example 1.
FIGS. 2a and 2b are schematic views illustrating the method for determining wettability by using a separator.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

Throughout the specification, the expression 'a part includes, comprises an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Unless otherwise stated, temperature is expressed in the unit of a Celsius degree, and content or content ratio is expressed on the weight basis.

The terms, 'top', 'bottom', 'left' and 'right' represent positions or directions in drawings to which reference is made, and are not used for limitary purposes.

Specific terms used in the following description are for the convenience of description and understanding, and the scope of the present disclosure is not limited thereto. Such terms include the above-listed words, derivatives thereof and synonyms thereof.

The present disclosure relates to a separator for an electrochemical device, an electrochemical device including the separator and a method for manufacturing the separator.

Herein, the electrochemical device is a system in which chemical energy is converted into electrical energy through electrochemical reactions, has a concept including a primary battery and a secondary battery, wherein the secondary battery is capable of charging and discharging and has a concept covering a lithium ion battery, a nickel-cadmium battery, a nickel-hydrogen battery, or the like.

The separator according to the present disclosure functions as a porous ion-conducting barrier which allows ions to pass therethrough, while interrupting an electrical contact between a negative electrode and a positive electrode. The separator has a plurality of pores formed therein, and the pores are interconnected preferably so that gases or liquids may pass from one surface of the separator to the other surface of the separator.

According to an embodiment of the present disclosure, the separator includes a porous separator substrate including a polymer material, and a porous coating layer formed on at least one surface of the substrate, wherein the porous coating layer includes inorganic particles and a binder resin. In the porous coating layer, the inorganic particles are bound to one another by means of the binder resin, and may have a porous structure including pores derived from the interstitial volumes formed among the inorganic particles.

The porous coating layer includes a binder resin and inorganic particles, has a plurality of micropores therein, wherein the micropores are interconnected with one another, and shows structural characteristics as a porous layer through which gases or liquids pass from one surface to the other surface. According to an embodiment of the present disclosure, the porous coating layer includes the binder resin and the inorganic particles at a weight ratio of 50:50-1:99. The ratio may be controlled suitably within the above-defined range. For example, the binder resin may be used in an amount of 50 wt% or less, 40 wt% or less, or 30 wt% or less, based on 100 wt% of the combined weight of the binder resin and the inorganic particles. In addition, within the above-defined range, the binder resin may be used in an amount of 1 wt% or more, 5 wt% or more, or 10 wt% or more. According to the present disclosure, the porous coating layer preferably has a porous structure with a view to ion permeability. According to an embodiment of the present disclosure, when the content of the binder resin is less than 1 wt%, the adhesion between the separator and the electrode is not sufficient. When the content of the binder resin is excessively high, porosity may be degraded, and the battery using the separator shows increased resistance to cause degradation of the electrochemical characteristics of the battery.

According to an embodiment of the present disclosure, in the porous coating layer, the inorganic particles are bound to one another and integrated with one another by means of a polymer resin, wherein the interstitial volumes among the inorganic particles may form pores. As used herein, 'interstitial volume' means a space defined by the inorganic particles facing each other substantially in a closely packed or densely packed structure of the inorganic particles.

According to an embodiment of the present disclosure, the porous coating layer may have a porosity of 40-70 vol%. Within the above-defined range, the porosity may be 40 vol% or more, or 45 vol% or more. In combination with this or independently from this, the porosity may be 70 vol% or less, or 65 vol% or less. Considering ion conductivity, i.e. in order to ensure a sufficient path through which ions can pass, the porosity may be controlled to 40 vol% or more. In addition, in order to ensure heat resistance and adhesiveness, the porosity may be controlled to 65 vol% or less. Therefore, considering such electrochemical characteristics, the porosity of the porous coating layer may be controlled suitably within the above-defined range.

Meanwhile, according to the present disclosure, the porous coating layer may have a total thickness controlled suitably within a range of 1-10 $\mu$m. The total thickness of the porous coating layer is the sum of the thicknesses of the porous coating layers formed on the surfaces of all sides of the separator substrate. If a porous coating layer is formed merely on one surface of the separator substate, the thickness of one porous coating layer may satisfy the above-defined range. If porous coating layers are formed on both surfaces of the separator substate, the sum of the thicknesses of both porous coating layers may satisfy the above-defined range. When the thickness of the porous coating layer is less than 1 $\mu$m, it is not possible to obtain a sufficient effect of improving heat resistance due to an excessively small amount of inorganic particles contained in the porous coating layer. Meanwhile, when the thickness of the porous coating layer is excessively thicker than the above-defined range, the separator has a large thickness, thereby making it difficult to manufacture a thin battery and to improve the energy density of a battery.

Meanwhile, according to an embodiment of the present disclosure, the porous coating layer includes inorganic particles and a binder resin. According to the present disclosure, the binder resin includes an acrylic binder resin and polyvinyl acetate (PVAc). According to an embodiment of the present disclosure, the binder resin may include the acrylic binder resin and the PVAc at a weight ratio of 2:8-9:1. Considering peel strength, the binder resin may include the acrylic binder resin and the PVAc at a weight ratio of 3:7-7:3.

According to an embodiment of the present disclosure, the PVAc preferably has a molecular weight (Mw) of 150,000-800,000. When the above-defined range is satisfied, it is possible to ensure excellent peel strength. When the molecular weight (Mw) is less than 150,000, peel strength may be degraded.

According to the present disclosure, the acrylic binder resin may refer to a polymer compound containing a polymerization unit derived from a (meth)acrylate monomer, or a polymer compound containing a repeating unit of a monomer including a (meth)acryloyl group as a part of substituents.

According to an embodiment of the present disclosure, the acrylic binder resin has a glass transition temperature (Tg) of 0°C or less, preferably - 50°C to 0°C. According to an embodiment of the present disclosure, the acrylic binder resin may include a C1-C8 alkyl acrylate and/or alkyl methacrylate as a monomer. Particular examples of the alkyl acrylate include at least one selected from methyl acrylate, ethyl acrylate, isopropyl acrylate, n-butyl acrylate, isobutyl acrylate, cyclohexyl acrylate and 2-ethylhexyl acrylate. In addition, particular examples of the alkyl methacrylate include at least one selected from methyl methacrylate, ethyl methacrylate, isopropyl methacrylate, n-butyl methacrylate, isobutyl methacrylate, cyclohexyl methacrylate and 2-ethylhexyl methacrylate. However, the scope of the present disclosure is not limited thereto.

According to the present disclosure, the term 'molecular weight' refers to weight average molecular weight (Mw). According to an embodiment of the present disclosure, the molecular weight (Mw) may be determined by using gel permeation chromatography (GPC). For example, 200 mg of a polymer resin to be analyzed is diluted in 200 mL of a solvent, such as tetrahydrofuran (THF), to prepare a sample having a concentration of about 1000 ppm, and the molecular weight may be determined by using an Agilent 1200 series GPC instrument at a flow rate of 1 mL/min through a refractive index (RI) detector.

In addition, besides the PVAc and the acrylic binder resin, the porous coating layer may further include at least one second binder resin selected from the group consisting of a vinylidene-containing fluorinated binder resin, polyvinyl pyrrolidone, polyethylene oxide, polyarylate, cyanoethyl pullulan, cyanoethyl polyvinyl alcohol, cyanoethyl cellulose, cyanoethyl sucrose and pullulan, if necessary. The second binder resin may be present in an amount of 10 wt% or less, 5 wt% or less, or 1 wt% or less, based on 100 wt% of the total weight of the binder resins contained in the porous coating layer.

According to an embodiment of the present disclosure, there is no particular limitation in the inorganic particles, as long as they are electrochemically stable. In other words, there is no particular limitation in the inorganic particles that may be used herein, as long as they cause no oxidation and/or reduction in the range (e.g. 0-5 V based on $Li/Li^+$) of operating voltage of an applicable electrochemical device. Particularly, when using inorganic particles having a high dielectric constant as inorganic particles, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, preferably 10 or more. Non-limiting examples of the inorganic particles having a dielectric constant of 5 or more may include at least one selected from the group consisting of $BaTiO_3$, $Pb(Zr, Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3PbTiO_3$ (PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $SiC$, $Al(OH)_3$, $AlOOH$ and $TiO_2$.

In addition, inorganic particles having lithium ion transportability, i.e. inorganic particles containing lithium elements, and not storing lithium but transporting lithium ions, may be used as inorganic particles. Non-limiting examples of the inorganic particles having lithium ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), such as $14Li_2O-9Al_2O_3-38TiO_2-39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 < y < 2$, $0 < z < 4$), such as $Li_3PO_4-Li_2S-SiS2$, and $P_2S_5$-based glass ($Li_xP_yS_z$, $0 < x < 3$, $0 < y < 3$, $0 < z < 7$), such as $LiI-Li_2S-P_2S_5$, or a mixture thereof.

Further, the inorganic particles may have an average particle diameter ($D_{50}$) of 10 nm to 5 $\mu$m. Meanwhile, when the particles have an average particle diameter ($D_{50}$) of less than 10 nm, the inorganic particles have an excessively large surface area to cause degradation of dispersibility of the inorganic particles in slurry for forming a porous coating layer during the preparation of the slurry. Meanwhile, as the particle diameter of the inorganic particles is increased, the mechanical properties of the separator may be degraded. Therefore, it is preferred that the particle diameter of the inorganic particles does not exceed 5 $\mu$m. Particularly, the particle diameter of the inorganic particles may be 2 $\mu$m or less.

According to an embodiment of the present disclosure, the particle diameter ($D_{50}$) of the inorganic particles refers to an integrated value at 50% from the side of smaller particles calculated based on the results of determination of the particle size distribution of particles after classification using a particle size analyzer used conventionally in the art. Such particle size distribution can be determined by a diffraction or scattering intensity pattern generated upon the contact of light with the particles. As a particle size distribution analyzer, Microtrac 9220FRA or Microtrac HRA available from Nikkiso may be used.

As described above, the separator according to the present disclosure includes a porous separator substrate including a polymer material. The separator substrate may be a porous film including a polymer resin, such as a porous polymer film made of a polyolefin material including polyethylene, polypropylene, or the like. The separator substrate may be molten at least partially, when the battery temperature is increased, and thus blocks the pores to induce shut-down. According to an embodiment of the present disclosure, the separator substrate may have a porosity of 40-70 vol%. Meanwhile, the pores of the separator substrate may have a diameter of about 10-70 nm based on the largest diameter of the pores. According to the present disclosure, the separator substrate may have a thickness of 5-14 μm with a view to thin filming and high energy density of an electrochemical device.

According to the present disclosure, the term 'porosity' means a volume occupied by pores based on the total volume of a structure, is expressed in the unit of percentage (%), and may be used exchangeably with the terms, such as pore ratio, porous degree, or the like. According to the present disclosure, the method for determining porosity is not particularly limited. According to an embodiment of the present disclosure, the porosity may be determined by the Brunauer-Emmett-Teller (BET) method using nitrogen gas or Hg porosimetry and according to ASTM D-2873. Further, the net density of a separator may be calculated from the density (apparent density) of the separator and the compositional ratio of ingredients contained in the separator and density of each ingredient, and the porosity of the separator may be calculated from the difference between the apparent density and the net density.

Meanwhile, according to an embodiment of the present disclosure, the pore size, pore size distribution and mean pore size (nm) may be determined by using a capillary flow porometer. The capillary flow porometer is based on the process including wetting the pores of a separator with a liquid having a known surface tension, and applying pneumatic pressure thereto to measure the bubble point (max pore) where the initial flux is generated. Particular examples of the capillary flow porometer include CFP-1500-AE available from Porous Materials Co., or the like.

Meanwhile, according to an embodiment of the present disclosure, the separator substrate may further include at least one polymer resin selected from polyethylene terephthalate, polybutylene terephthalate, polyacetal, polyamide, polycarbonate, polyimide, polyetherether ketone, polyether sulfone, polyphenylene oxide, polyphenylene sulfide and polyethylene naphthalene, if necessary, for improving durability, or the like.

According to an embodiment of the present disclosure, the separator substrate may be a porous polymer film obtained by the method as described hereinafter, and may be a sheet of monolayer film or a multilayer film formed by lamination of two or more sheets. When two or more sheets are laminated, each layer preferably has the above-described characteristics in terms of its ingredients.

Next, the method for manufacturing the separator according to an embodiment of the present disclosure will be explained.

The method for manufacturing a separator according to an embodiment of the present disclosure includes the steps of: (S10) preparing a porous separator substrate; (S20) preparing slurry for forming a porous coating layer; (S30) applying the slurry onto at least one surface of the porous separator substrate; and (S40) drying the separator substrate coated with the slurry.

First, a separator substrate for a separator is prepared (S10). Any separator substrate may be used with no particular limitation, as long as it satisfies the above-defined characteristics. According to an embodiment of the present disclosure, the separator may be obtained through a wet process including melting a polymer material and molding the molten polymer material into a film shape, a dry process, or the like, and a commercially available porous polymer film or non-woven web may be used as a separator substrate.

Next, slurry for forming a porous coating layer is prepared (S20). The slurry may be prepared by introducing the inorganic particles and the resin materials including PVAc and an acrylic binder resin to a solvent and dispersing them therein homogeneously. The method for preparing the slurry is not particularly limited, as long as it can provide a homogeneously dispersed mixture. According to an embodiment of the present disclosure, the slurry may be prepared by introducing inorganic particles first to a solvent and dispersing them therein, and then introducing resin materials thereto. Optionally, the slurry may further include a dispersing agent, and the dispersing agent may be introduced simultaneously with the inorganic particles, or before or after introducing the inorganic particles. According to an embodiment of the present disclosure, the solvent preferably includes an aqueous solvent including at least one of water and ethanol.

When using an aqueous solvent as mentioned above, the method is eco-friendly and it is less likely that the worker is exposed to VOCs, or the like. However, when using an aqueous solvent as a dispersion medium, there are problems in that the binding force between the separator substrate and the porous coating layer is degraded or the inorganic particles are detached, resulting in degradation of heat resistance. Detachment of the inorganic particles may cause the problem of contamination of a production line during the manufacture of the separator. Therefore, the present inventors have conducted intensive studies and found that introduction of PVAc during the manufacture of a separator using an aqueous solvent can solve the problems of degradation of binding force and detachment of inorganic particles. In addition, since PVAc has high polarity, it is effective for improving the wettability of a separator with an electrolyte.

According to an embodiment of the present disclosure, the inorganic particles are pulverized preferably after adding the inorganic particles and the resin materials to the aqueous solvent. Although there is no particular limitation, the pulverization time may be 1-20 hours, and the pulverized inorganic particles may have a particle size of 10 nm to 10 μm. The inorganic particles may be pulverized by a conventional method, such as ball milling.

Meanwhile, according to an embodiment of the present disclosure, the slurry may have a concentration of the ingredients (solid content), except the solvent, in the slurry of 1-40 wt%, but is not limited thereto.

Then, the slurry is applied onto at least one surface of the separator substrate (S30). The method for coating the slurry on the separator substrate is not particularly limited, and any conventional coating method known to those skilled in the art may be used. For example, various processes, such as dip coating, bar coating, die coating, roll coating, comma coating or a combination thereof, may be used.

After that, the separator substrate coated with the slurry is dried (S40). The drying step is set under such a condition that generation of surface defects on the composite porous layer may be minimized. According to an embodiment of the present disclosure, the drying step may be carried out at 80°C or higher, and the drying temperature is controlled preferably within a range where the ingredients contained in the separator are not damaged or deteriorated. For example, the drying temperature is controlled preferably at 135°C or lower. The drying step may use a drying-aid device, such as a drying oven or a hot air, within a suitable range. When the slurry is dried at the above-defined temperature range, the inorganic particles and the binder resin are not localized in the slurry until the slurry is dried to form a porous coating layer, but are maintained in a state applied homogeneously on the surface of the separator substrate. If the drying temperature is excessively lower than the above-defined temperature range, the slurry is allowed to stand at low temperature for a long time, while not being dried, and the inorganic particles are localized, and for example, the particles are excessively aggregated on the surface of the separator substrate. In other words, the separator may not ensure heat resistance and stability, since the separator substrate is not coated sufficiently with the porous coating layer.

According to an embodiment of the present disclosure, the secondary battery includes: an electrode assembly including a negative electrode, a positive electrode and a separator interposed between the negative electrode and the positive electrode; and an electrolyte. The electrode assembly may be received in a battery casing, and the electrolyte may be injected thereto to provide a battery.

According to the present disclosure, the positive electrode includes a positive electrode current collector, and a positive electrode active material layer formed on at least one surface of the current collector and containing a positive electrode active material, a conductive material and a binder resin. The positive electrode active material may include any one selected from: layered compounds, such as lithium manganese composite oxide ($LiMn_2O_4$, $LiMnO_2$, etc.), lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); lithium vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1), $Li_aMn_xM1_yM2_zO_2$ (wherein each of M1 and M2 independently represents at least one of Co, Ni, Fe, Cr, Zn and Ta, and each of x, y and z independently represents a number of 0-1), or $Li_2Mn_3MO_8$ (wherein M is Fe, Co, Ni, Cu or Zn); $LiMn_2O_4$ in which Li is partially substituted with an alkaline earth metal ion; disulfide compounds; and $Fe_2(MoO_4)_3$; or a mixture of two or more of them.

According to the present disclosure, the negative electrode includes a negative electrode current collector, and a negative electrode active material layer formed on at least one surface of the current collector and containing a negative electrode active material, a conductive material and a binder resin. The negative electrode may include, as a negative electrode active material, any one selected from: lithium metal oxide; carbon such as non-graphitizable carbon or graphite-based carbon; metal composite oxides, such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers, such as polyacetylene; Li-Co-Ni type materials; and titanium oxide; or a mixture of two or more of them.

According to an embodiment of the present disclosure, the conductive material may be any one selected from the group consisting of graphite, carbon black, carbon fibers or metal fibers, metal powder, conductive whiskers, conductive metal oxides, activated carbon and polyphenylene derivatives, or a mixture of two or more of such conductive materials. More particularly, the conductive material may be any one selected from natural graphite, artificial graphite, Super-P, acetylene black, Ketjen black, channel black, furnace black, lamp black, thermal black, denka black, aluminum powder, nickel powder, zinc oxide, potassium titanate and titanium dioxide, or a mixture of two or more such conductive materials.

The current collector is not particularly limited, as long as it causes no chemical change in the corresponding battery and has high conductivity. Particular examples of the current collector may include stainless steel, copper, aluminum, nickel, titanium, baked carbon, aluminum or stainless steel surface-treated with carbon, nickel, titanium or silver, or the like.

The binder resin may be a polymer used conventionally for an electrode in the art. Non-limiting examples of the binder resin include, but are not limited to: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, and carboxymethyl cellulose.

According to the present disclosure, the electrolyte is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent selected from propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone), and mixtures thereof. However, the present disclosure is not limited thereto.

In addition, the present disclosure provides a battery module which includes a battery including the electrode assembly as a unit cell, a battery pack including the battery module, and a device including the battery pack as an electric power source. Particular examples of the device include, but are not limited to: power tools driven by the power of an electric motor; electric cars, including electric vehicles (EV), hybrid electric vehicles (HEV), plug-in hybrid electric vehicles (PHEV), or the like; electric two-wheeled vehicles, including E-bikes and E-scooters; electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### [Examples]

### (1) Manufacture of Separator

### Examples 1 and 2

First, Al(OH)$_3$ (0.5-0.6 $\mu$m, Huber), PVAc (Mw: 500,000, Aldrich) and an acrylic binder resin (particle diameter: 150 nm, Tg: -40°C, toyo) were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator. The ingredients used in Examples 1 and 2 and contents thereof are shown in the following Table 1.

[Table 1]

| | | Example 1 | Example 2 |
|---|---|---|---|
| Type of inorganic particles | | ATH | ATH |
| Binder resins | Ratio of PVAc : acrylic binder (weight ratio) | 50:50 Acrylic binder resin (a) PVAc (1) | 90:10 Acrylic binder resin (a) PVAc (1) |
| Type of dispersing agent | | PAA | PAA |
| Inorganic particles : binder resin : dispersing agent (content ratio, on the weight basis) | | 100:2:1 | 100:2:1 |
| Solid content in slurry (wt%) | | 30 | 30 |

ATH (0.5-0.6 $\mu$m, available from Huber), acrylic binder resin (a) (CSB-130, Toyo, Tg: -25°C, particle diameter 150 nm, copolymer of methyl methacrylate (MMA) with ethylhexyl acrylate (2-EHA) (weight ratio 3:7)), PVAc (1) (Mw: 500,000, available from Aldrich), PVAc (2) (Mw: 150,000, available from Aldrich), acrylic binder resin (a) (CSB-130, Toyo, Tg: -25°C, particle diameter 150 nm, copolymer of methyl methacrylate (MMA) with ethylhexyl acrylate (2-EHA) (weight ratio 3:7)), acrylic binder resin (b) (HC12, 470 nm, core-shell structure, core Tg 50°C, shell Tg 30°C, available from Hansol Chemical), PVAc (Mw: 500,000, available from Aldrich)

## Comparative Example 1

First, Al(OH)$_3$ (0.5-0.6 $\mu$m, Huber) and an acrylic binder resin (a) (particle diameter: 150 nm, Tg: -40°C, toyo) were introduced to water to obtain slurry for forming a porous coating layer. Next, carboxymethyl cellulose (CMC) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 2

First, Al(OH)$_3$ and an acrylic binder resin (a) were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 3

First, Al(OH)$_3$ and PVAc were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 4

First, Al(OH)$_3$, an acrylic binder resin (b) and PVAc were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 5

First, Al(OH)$_3$ and an acrylic binder resin (b) were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 6

First, Al(OH)$_3$ (0.5-0.6 $\mu$m, Huber), PVAc (Mw: 500,000, Aldrich) and an acrylic binder resin (particle diameter: 150 nm, Tg: -40°C, toyo) were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

## Comparative Example 7

First, Al(OH)$_3$ (0.5-0.6 $\mu$m, Huber), PVAc (Mw: 150,000, Aldrich) and an acrylic binder resin (particle diameter: 150 nm, Tg: -40°C, toyo) were introduced to water to obtain slurry for forming a porous coating layer. Next, polyacrylic acid (PAA) was introduced to the slurry as a dispersing agent. The slurry was applied onto one surface of a separator substrate (polyethylene, Gurley value 95 sec/100 cc, weight 5.4 g/m$^2$, thickness 10.6 $\mu$m) through a bar coating process, followed by drying. The drying was carried out by air blowing (air blowing temperature 100°C) for 10 seconds. Then, the resultant product was cut into a size of 60 mm (length) x 25 mm (width) to obtain a separator.

The ingredients used in Comparative Examples 1-7 and contents thereof are shown in the following Table 2.

[Table 2]

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Type of inorganic particles | ATH | ATH | ATH | ATH | ATH | ATH | ATH |
| Binder resins — Ratio of PVAc : acrylic binder resin (weight ratio) | 0:100 Acrylic binder resin (a) | 0:100 Acrylic binder resin (a) | 100:0 | 50:50 Acrylic binder resin (b) | 0:100 Acrylic binder resin (b) | 10:90 Acrylic binder resin (a) PVAc (1) | 10:90 Acrylic binder resin (a) PVAc (2) |
| Type of dispersing agent | CMC | PAA | PAA | PAA | PAA | PAA | PAA |
| Inorganic particles : binder resin : dispersing agent (content ratio, on the weight basis) | 100:2:1 | 100:2:1 | 100:2:1 | 100:2:1 | 100:2:1 | 100:2:1 | 100:2:1 |
| Solid content in slurry (wt%) | 30 | 30 | 30 | 30 | 30 | 30 | 30 |

ATH (0.5-0.6 μm, available from Huber), acrylic binder resin (a) (CSB-130, Toyo, Tg: -25°C, particle diameter 150 nm, copolymer of methyl methacrylate (MMA) with ethylhexyl acrylate (2-EHA) (weight ratio 3:7)), PVAc (1) (Mw: 500,000, available from Aldrich), PVAc (2) (Mw: 150,000, available from Aldrich), acrylic binder resin (a) (CSB-130, Toyo, Tg: -25°C, particle diameter 150 nm, copolymer of methyl methacrylate (MMA) with ethylhexyl acrylate (2-EHA) (weight ratio 3:7)), acrylic binder resin (b) (HC12, 470 nm, core-shell structure, core Tg 50°C, shell Tg 30°C, available from Hansol Chemical), PVAc (Mw: 500,000, available from Aldrich)

(2) Test Examples

1) **Determination of Peel Strength**

Each of the separators obtained from Example 1 and 2 and Comparative Examples 1-7 was cut into a size of 70 mm (length) x 15 mm (width) to prepare a specimen. The prepared specimen was attached and fixed to a glass plate and peeled therefrom at 25°C under the conditions of an angle of 180° mode at a speed of 300 mm/min, and the strength was measured.

2) **Determination of Shrinkage of Separator**

Each of the separators according to Examples and Comparative Examples was allowed to stand at 130°C for 30 minutes, and the shrinkage of each separator was determined. The shrinkage was obtained by marking two points optionally in each of the transverse direction (TD) and the machine direction (MD) on the separator and calculating an increase/decrease in the interval (point interval) between the two points according to the following Formula 1.

[Formula 1]

$$\text{Shrinkage (\%)} = \{(B-A)/A\} \times 100$$

In Formula 1, A is a point interval at the initial stage before each separator is allowed stand at high temperature, and B is a point interval at the final stage after each separator is allowed stand at high temperature.

3) **Determination of Air Permeability**

The air permeability means the time required for 100cc of air to permeate through an object to be tested for air permeation time, such as a separator or separator substrate, and is expressed in the unit of second/100 cc. The air permeability may be represented by Gurley value, or the like. According to the present disclosure, the air permeability was determined based on JIS P8117.

### 4) Determination of Wettability

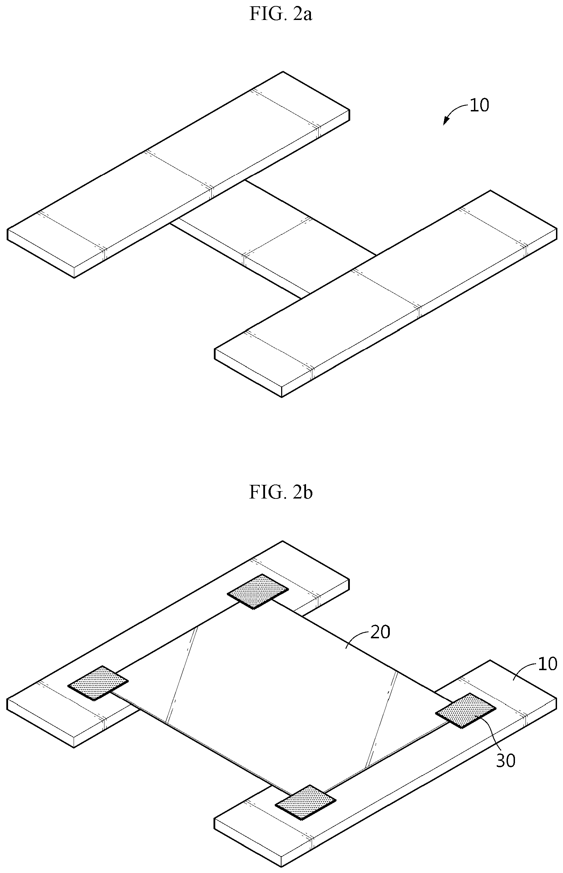

After forming a separator having 5cm x 5 cm according to each of Examples and Comparative Examples, MD/TD directions were marked on the separator surface on the basis MD/TD directions of the separator substrate. Each separator 20 was fixed on the H-shaped slide glass 10 as shown in FIGS. 2a and 2b with a tape 30 so that the separator substrate might direct outwardly. Next, a micro-syringe was filled with 2 $\mu$m of propylene carbonate (PC) with no air bubbles, the liquid was pushed out toward the nozzle tip of the micro-syringe to form a liquid droplet, and the liquid droplet was allowed to be in contact with the surface of the separator substrate. After the lapse of 5 minutes, the separator surface with which the liquid droplet was in contact was observed with an optical microscope by using a dino capture program. The distance of liquid droplet diffusion was measured in MD and TD. The test was repeated three times for each separator, and the average value was calculated. The results are shown in the following Table 3 and Table 4. It can be seen that PC is transferred to the porous coating layer through the pores of the separator substrate, and the wettability varies with the binder composition of the porous coating layer. As shown in Table 3 and Table 4, the separators according to Examples show a higher wettability ratio as compared to the separators according to Comparative Examples 1, 2, 4 and 5. In the case of Comparative Examples 3, 6 and 7, each separator shows a similar level of wettability, but shows a lower peel strength and has poor shrinking characteristics, as compared to the separators according to Examples.

[Table 3]

| | | Example 1 | Example 2 |
|---|---|---|---|
| Thickness of separator ($\mu$m) | | 12.5 | 12.5 |
| Gurley value (sec/100cc) | | 119 | 116 |
| Unit weight of separator (g/m$^2$) * number in parentheses represents weight of porous coating layer portion in unit weight of separator | | 7.52 (2.12) | 7.60 (2.20) |
| packing density (coating amount/coating thickness of porous coating layer) (g/cm$^2$) | | 1.18 | 1.16 |
| Peel strength (gf/15mm) | | 90.7 | 34.1 |
| Shrinkage (%) | MD | 6 | 8 |
| | TD | 9 | 7 |
| Wettability (MD/TD) (mm) | | 3.2/3.0 | 2.5/2.2 |

[Table 4]

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Thickness of separator ($\mu$m) | | 12.4 | 12.5 | 12.5 | 12.5 | 12.6 | 12.6 | 12.5 |
| Gurley value (sec/100cc) | | 104 | 107 | 106 | 115 | 110 | 108 | 104 |
| Unit weight of separator (g/m$^2$) * number in parentheses represents weight of porous coating layer portion in unit weight of separator | | 7.72 (2.32) | 7.90 (2.50) | 7.84 (2.30) | 7.62 (2.22) | 7.90 (2.29) | 7.88 (4.28) | 7.74 (2.34) |
| packing density (coating amount of porous coating layer/ coating thickness) (g/cm$^2$) | | 1.26 | 1.29 | 1.21 | 1.17 | 1.15 | 1.24 | 1.23 |
| Peel strength (gf/15mm) | | 12.9 | 29.9 | 7.2 | 10.8 | 5.6 | 9.4 | 9.2 |
| Shrinkage (%) | MD | 10 | 8 | 10 | 9 | 9 | 10 | 10 |
| | TD | 8 | 6 | 10 | 8 | 8 | 9 | 9 |
| Wettability (MD/TD) (mm) | | 2.4/2.2 | 2.4/2.2 | 3.7/3.6 | 2.5/2.4 | 2.0/1.9 | 3.5/3.4 | 3.3/3.2 |

Comparative Examples 2 and 5 show a low peel strength. Particularly, Comparative Example 5 shows a lower peel strength as compared to Comparative Example 2. This suggests that use of an acrylic binder having a low Tg is preferred. Meanwhile, in the case of Comparative Example 3, use of PVAc alone provides a low peel strength, and the separator causes dissolution of a large amount of PVAc in the electrolyte, when being applied to a battery, and the battery cannot be operated smoothly. In the case of Example 2, the separator shows an improved peel strength as compared to Comparative Examples, which suggests that a content of PVAc of 20 wt% or more is preferred in terms of improvement of peel strength.

## Claims

1. A separator for an electrochemical device which comprises a porous separator substrate comprising a polymer material and a porous coating layer coated on at least one surface of the porous separator substrate,

   wherein the porous coating layer comprises inorganic particles and a binder resin,
   the binder resin comprises a mixture of polyvinyl acetate (PVAc) with an acrylic binder resin, the mixture comprises the polyvinyl acetate (PVAc) and the acrylic binder resin at a weight ratio of 2:8-9:1, and
   the acrylic binder resin has a Tg of 0°C or less.

2. The separator for an electrochemical device according to claim 1, wherein the polyvinyl acetate (PVAc) has a molecular weight (Mw) of 150,000-850,000 and the molecular weight (Mw) is determined by the method specified in the description of the present application.

3. The separator for an electrochemical device according to claim 1, wherein the mixture comprises the polyvinyl acetate (PVAc) and the acrylic binder resin at a weight ratio of 3:7-7:3.

4. The separator for an electrochemical device according to claim 1, wherein the inorganic particles comprise at least one of $Al_2O_3$, boehmite, ATH ($Al(OH)_3$), MgO, $Mg(OH)_2$ and $BaTiO_3$.

5. The separator for an electrochemical device according to claim 4, wherein the inorganic particles have a particle diameter of 0.1 nm to 2.0 $\mu$m.

6. The separator for an electrochemical device according to claim 1, wherein the porous coating layer comprises the binder resin and the inorganic particles at a weight ratio of 50:50-1:99.

7. The separator for an electrochemical device according to claim 1, wherein the porous coating layer further comprises a dispersing agent.

8. A method for manufacturing the separator for an electrochemical device as defined in claim 1, which comprises forming a porous coating layer by coating slurry for forming a porous coating layer containing an aqueous solvent, including water, a binder resin and inorganic particles onto the surface of a porous substrate.

9. The method for manufacturing the separator for an electrochemical device according to claim 8, wherein the content of the ingredients (solid content), except the solvent, in the slurry for forming a porous coating layer is 1-40 wt%.

10. An electrode assembly for an electrochemical device which comprises a negative electrode, a positive electrode and a separator interposed between the negative electrode and the positive electrode, wherein the separator is the same as defined in claim 1.

## Patentansprüche

1. Separator für eine elektrochemische Vorrichtung, der ein poröses Separatorsubstrat, umfassend ein Polymermaterial, und eine poröse Beschichtung, die auf mindestens einer Oberfläche des porösen Separatorsubstrats aufgebracht ist, umfasst,

   worin die poröse Beschichtung anorganische Teilchen und ein Bindemittelharz umfasst,
   wobei das Bindemittelharz ein Gemisch aus Polyvinylacetat (PVAc) mit einem Acrylbindemittelharz umfasst,
   wobei das Gemisch das Polyvinylacetat (PVAc) und das Acrylbindemittelharz in einem Gewichtsverhältnis von 2:8-9:1 umfasst, und
das Acrylbindemittelharz eine Tg von 0°C oder weniger aufweist.

**2.** Separator für eine elektrochemische Vorrichtung gemäß Anspruch 1, worin das Polyvinylacetat (PVAc) ein Molekulargewicht (Mw) von 150.000-850.000 aufweist und das Molekulargewicht (Mw) mittels der in der Beschreibung der vorliegenden Anmeldung beschriebenen Methode bestimmt wird.

**3.** Separator für eine elektrochemische Vorrichtung gemäß Anspruch 1, worin das Gemisch da Polyvinylacetat (PVAc) und das Acrylbindemittelharz in einem Gewichtsverhältnis von 3:7-7:3 umfasst.

**4.** Separator für eine elektrochemische Vorrichtung gemäß Anspruch 1, worin die anorganischen Teilchen mindestens eines aus $Al_2O_3$, Böhmit, ATH ($Al(OH)_3$), MgO, $Mg(OH)_2$ und $BaTiO_3$ umfassen.

**5.** Separator für eine elektrochemische Vorrichtung gemäß Anspruch 4, worin die anorganischen Teilchen einen Teilchendurchmesser von 0,1 nm bis 2,0 $\mu$m aufweisen.

**6.** Separator für eine elektrochemische Vorrichtung gemäß Anspruch 1, worin die poröse Beschichtung das Bindemittelharz und die anorganischen Teilchen in einem Gewichtsverhältnis von 50:50-1:99 umfasst.

**7.** Separator für eine elektrochemische Vorrichtung gemäß Anspruch 1, worin die poröse Beschichtung ferner ein Dispersionsmittel umfasst.

**8.** Verfahren zur Herstellung des Separators für eine elektrochemische Vorrichtung wie in Anspruch 1 definiert, das das Ausbilden einer porösen Beschichtung durch Aufbringen einer Aufschlämmung zur Ausbildung einer porösen Beschichtung, die ein wässriges Lösungsmittel, einschließlich Wasser, ein Bindemittelharz und anorganische Teilchen enthält, auf die Oberfläche eines porösen Substrats umfasst.

**9.** Verfahren zur Herstellung des Separators für eine elektrochemische Vorrichtung gemäß Anspruch 8, worin der Gehalt der Bestandteile (Feststoffgehalt) außer des Lösungsmittels in der Aufschlämmung zur Bildung einer porösen Beschichtung 1-40 Gew.-% beträgt.

**10.** Elektrodenanordnung für eine elektrochemische Vorrichtung, die eine negative Elektrode, eine positive Elektrode und einen zwischen der negativen Elektrode und der positiven Elektrode zwischengeschalteten Separator umfasst, worin der Separator der gleiche wie in Anspruch 1 definiert ist.

## Revendications

**1.** Séparateur destiné à un dispositif électrochimique qui comprend un substrat séparateur poreux comprenant un matériau polymère et une couche de revêtement poreux étalée sur au moins une surface du substrat séparateur poreux,

dans lequel la couche de revêtement poreux comprend des particules inorganiques et une résine liante, la résine liante comprend un mélange de poly(acétate de vinyle) (PVAc) avec une résine liante acrylique, le mélange comprend le poly(acétate de vinyle) (PVAc) et la résine liante acrylique à un rapport pondéral de 2:8 à 9:1, et
la résine liante acrylique présente un Tg de 0 °C ou moins.

**2.** Séparateur destiné à un dispositif électrochimique selon la revendication 1, dans lequel le poly(acétate de vinyle) (PVAc) présente un poids moléculaire (Mw) de 150 000 à 850 000 et le poids moléculaire (Mw) est déterminé par le procédé spécifié dans la description de la présente demande.

**3.** Séparateur destiné à un dispositif électrochimique selon la revendication 1, dans lequel le mélange comprend le poly(acétate de vinyle) (PVAc) et la résine liante acrylique à un rapport pondéral de 3:7 à 7:3.

**4.** Séparateur destiné à un dispositif électrochimique selon la revendication 1, dans lequel les particules inorganiques comprennent au moins un parmi $Al_2O_3$, boehmite, ATH ($Al(OH)_3$), MgO, $Mg(OH)_2$ et $BaTiO_3$.

**5.** Séparateur destiné à un dispositif électrochimique selon la revendication 4, dans lequel les particules inorganiques présentent un diamètre de particule de 0,1 nm à 2,0 $\mu$m.

**6.** Séparateur destiné à un dispositif électrochimique selon la revendication 1, dans lequel la couche de revêtement poreux comprend la résine liante et les particules inorganiques à un rapport pondéral de 50:50 à 1:99.

**7.** Séparateur destiné à un dispositif électrochimique selon la revendication 1, dans lequel la couche de revêtement poreux comprend en outre un agent dispersant.

**8.** Procédé de fabrication du séparateur destiné à un dispositif électrochimique tel que défini dans la revendication 1, qui comprend la formation d'une couche de revêtement poreux par étalement, sur la surface d'un substrat poreux, d'une suspension pour formation d'une couche de revêtement poreux contenant un solvant aqueux, incluant de l'eau, une résine liante et des particules inorganiques.

**9.** Procédé de fabrication du séparateur destiné à un dispositif électrochimique selon la revendication 8, dans lequel la teneur des ingrédients (teneur en matières solides), à l'exception du solvant, dans la suspension pour formation d'une couche de revêtement poreux est de 1 à 40 % en poids.

**10.** Ensemble électrode destiné à un dispositif électrochimique qui comprend une électrode négative, une électrode positive et un séparateur interposé entre l'électrode négative et l'électrode positive, dans lequel le séparateur est le même que celui défini dans la revendication 1.

FIG. 1

5.0kV 8.7mm x 20.0k SE(U)                                    2.00μm

FIG. 2a

FIG. 2b

**EP 4 106 094 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200021861

- KR 102005868